# EUROPÄISCHE PATENTANMELDUNG

(11) **EP 3 293 032 A1**
(43) Veröffentlichungstag der Anmeldung: **14.03.2018**
(21) Anmeldenummer: 17001500.2
(22) Anmeldetag: 07.09.2017
(51) Int. Cl.: B60K 37/06

(54) **HANDSCHALTER FÜR EINE HUBLADEBÜHNE UND VERFAHREN ZUM BEDIENEN EINER HUBLADEBÜHNE**

(30) Priorität: 13.09.2016 DE 102016010964
(71) Anmelder: Palfinger Tail Lifts GmbH, 27777 Ganderkesee (DE)
(72) Erfinder: Bley, Hubert, 49681 Garrel (DE)
(74) Vertreter: Möller, Friedrich

(57) **Zusammenfassung**

Hubladebühnen dienen zum Be- und Entladen von Gütern. Zur Steuerung der Hubladebühne weist diese einen Handschalter (10) auf. Bekannte Handschalter (10) weisen mehrere Bedienelemente auf, mit denen die Bewegung der Hubladebühne gesteuert wird. Weitere Funktionen, die über die bloße Steuerung der Hubladebühne hinausgehen, lassen sich in aller Regel nicht mit Hilfe des Handschalters (10) ausführen. Die Erfindung sieht es vor einen Handschalter (10) sowie ein Verfahren zum Bedienen einer Hubladebühne zu schaffen, durch welches der Betrieb der Hubladebühne einfach und sicher wird. Dazu ist es vorgesehen, dass der Handschalter (10) mindestens ein Aufnahmemittel zur Aufnahme von Signalen oder primären Informationen und mindestens ein Ausgabemittel zur Erzeugung einer Maßnahme oder von sekundären Informationen in Abhängigkeit von den aufgenommenen Signalen oder primären Informationen aufweist.

## Beschreibung

### Bezugszeichenliste:

- 10: Handschalter
- 11: Gehäuse
- 12: Kabel
- 13: Oberseite
- 14: Knopf
- 15: Knopf
- 16: Knopf
- 17: Anzeige
- 18: Antenne
- 19: Mikrofon
- 20: Lautsprecher
- 21: Leuchtmittel
- 22: Buchse
- 23: Adapter

Die Erfindung betrifft einen Handschalter für eine Hubladebühne gemäß dem Oberbegriff des Anspruchs 1. Außerdem betrifft die Erfindung ein Verfahren zum Bedienen einer Hubladebühne gemäß dem Oberbegriff des Anspruchs 7.

Hubladebühnen dienen dazu bei Fahrzeugen aller Art das Be- und Entladen von Gütern zu erleichtern. Dazu verfügen Hubladebühnen der gattungsgemäßen Art über eine heb- und senkbar und im Allgemeinen auch schwenkbar an einem Fahrzeug angelenkte Ladeplattform. Die Ladeplattform ist zu diesem Zweck an der Rückseite des Fahrzeuges unterstützt durch ein Hubwerk angeordnet, vorzugsweise im Bereich der Rückseite eines Aufbaus des Fahrzeuges. Zum Entladen des Fahrzeuges wird die Hubladebühne in der Regel aus einer vertikalen Position in eine horizontale Lage verschwenkt und auf den Untergrund abgesetzt. Nach Beendigung des Entlade- bzw. Beladevorganges wird die Hubladebühne in umgekehrter Reihenfolge, d. h. durch Anheben und Verfahren in eine vertikale Position, in eine Schließstellung gebracht.

Zur Steuerung der Hubladebühne weist das Fahrzeug bzw. die Hubladebühne einen Handschalter auf. Dieser Handschalter ist weder an oder in dem Aufbau des Fahrzeuges angeordnet oder mit diesem verbindbar bzw. fest verbunden. Bekannte Handschalter weisen mehrere Schalter bzw. Knöpfe auf, mit denen die Bewegung der Hubladebühne von einer Bedienperson gesteuert wird. Zum Ansteuern der Hubladebühne dienen sowohl einzelne Schalter als auch Kombinationen der Schalter.

Der Handschalter, der in der Regel ein Gehäuse, in welchem die Schalter integriert sind, aufweist, ist für eine ausreichende Energieversorgung durch mindestens eine elektrische Leitung mit dem Fahrzeug verbunden. Für eine Übertragung der Steuerbefehle ist der Handschalter mit dem Fahrzeug bei bekannten Ausführungsformen über vier elektrische Leitungen verbunden.

Weitere Funktionen, die über die bloße Steuerung der Hubladebühne hinausgehen, lassen sich in aller Regel nicht mit Hilfe des Handschalters ausführen. Um weitere Funktionen im Zusammenhang mit dem Betrieb des Fahrzeuges zu initiieren, muss die Bedienperson entsprechende Maßnahmen im Führerstand des Fahrzeuges oder an einer festen Steuereinheit am Aufbau des Fahrzeuges vornehmen. Dies gestaltet sich jedoch für die Bedienung der Hubladebühne als nachteilig, da die Bedienperson Ihre Position, von der aus Sie einen guten Überblick über den Ent- bzw. Beladevorgang besitzt, verlassen muss und somit ein erhöhtes Risiko für alle beteiligten Personen sowie für die Ware besteht.

Der Erfindung liegt daher die Aufgabe zugrunde, einen Handschalter sowie ein Verfahren zum Bedienen einer Hubladebühne zu schaffen, durch welches der Betrieb der Hubladebühne einfach und sicher wird.

Ein Handschalter zur Lösung dieser Aufgabe weist die Merkmale des Anspruchs 1 auf. Demnach ist es vorgesehen, dass der Handschalter für die Hubladebühne mindestens ein Aufnahmemittel zur Aufnahme von Signalen oder primären Informationen aufweist. Des Weiteren weist der Handschalter mindestens ein Ausgabemittel zur Erzeugung einer Maßnahme oder von sekundären Informationen in Abhängigkeit von den aufgenommenen Signalen oder primären Informationen auf. Bei den primären Informationen handelt es sich um alle Informationen, welche von dem mindestens einen Aufnahmemittel erfasst werden. Bei den sekundären Informationen handelt es sich um Informationen, die auf Basis der erfassten primären Informationen erzeugt werden. Durch das Aufnahmemittel und das Ausgabemittel des Handschalters bieten sich Möglichkeiten für weitere Anwendungen des Handschalters. Somit lassen sich Funktionalitäten, die bisher nur durch andere Vorrichtungen initiierbar oder durchführbar waren, nun auch durch den Handschalter durchführen. Dadurch muss die Bedienperson Ihre Position zur Bedienung der Hubladebühne nicht mehr verlassen, wodurch sich eine einfachere und sicherere Bedienung der Hubladebühne ergibt.

Bevorzugt kann es die vorliegende Erfindung weiter vorsehen, dass der Handschalter mit dem Fahrzeug über ein, insbesondere abkoppelbares, Kabel mit dem Fahrzeug verbunden ist, vorzugsweise dass der Handschalter nach dem Abkoppeln des Kabels mit einem Adapter verbindbar ist zur kabellosen Kommunikation mit dem Fahrzeug, oder dass der Handschalter kabellos ausgebildet ist. Demnach ist es vorgesehen, dass die Leitungen zur Versorgung des Handschalters mit Energie bzw. zur Steuerung der Hubladebühne an den Handschalter angekoppelt bzw. von dem Handschalter abgekoppelt werden kann. Im abgekoppelten Zustand ist es vorgesehen, dass an den Handschalter ein Adapter steckbar ist, der sowohl als Sender als auch als Empfänger zum Empfangen und Senden von Informationen dient. Das Fahrzeug weist eine entsprechende Gegenstelle zum Empfangen und Senden von Informationen auf. Für diesen kabellosen Betrieb kann es vorgesehen sein, dass der Handschalter durch eine interne Batterie oder einen Akku mit elektrischer Energie versorgt wird.

Außerdem kann es die Erfindung vorsehen, dass der Handschalter als eine reine Fernbedienung ausgebildet ist, die keinerlei physische Verbindung zum Fahrzeug aufweist. Die Steuerung der Hubladebühne erweist sich durch diese kabellose bzw. quasi kabellose Verbindung zwischen dem Fahrzeug und dem Handschalter als besonders flexibel bzw. einfach und sicher.

Bevorzugt kann es die vorliegende Erfindung weiter vorsehen, dass dem Handschalter eine Steuereinrichtung, insbesondere ein Prozessor, zugeordnet ist, der anhand von in einem Speicher des Handschalters gespeicherten Bedingungen bestimmt, welche Maßnahmen oder sekundären Informationen durch das Ausgabemittel als Reaktion auf die aufgenommenen Signale oder primären Informationen zu initiieren oder zu erzeugen sind. Sobald durch das mindestens eine Aufnahmemittel Signale oder primäre Informationen erfasst wurden, werden diese durch die Steuereinheit des Handschalters verarbeitet und mit abgespeicherten Daten abgeglichen. Die Steuereinrichtung ermittelt sodann anhand der erfassten Signale bzw. primären Informationen eine durchzuführende Maßnahme oder auszugebende sekundäre Informationen. Dabei kann es sich bei dem Signal beispielsweise um die Betätigung eines bestimmten Knopfes handeln, durch welchen ein Absenken der Hubladebühne bewirkt werden soll. Gleichermaßen kann es sich bei einer primären Information auch um eine Helligkeitsangabe handeln, welche die Maßnahme zur Folge hat, dass die Beleuchtung auf der Ladefläche des Fahrzeuges eingeschaltet wird. Durch das Erfassen von Informationen und die automatische Initiierung entsprechender Maßnahmen gestaltet sich die Handhabung des Handschalters als besonders einfach. Durch diese intelligente Steuerung der Hubladebühne durch den Handschalter wird es ermöglicht, neben den klassischen Steuerbefehlen weitere Funktionen im Zusammenhang mit der Bedienung der Hubladebühne durchzuführen, ohne dass die Bedienperson dadurch abgelenkt oder überfordert wird.

Ein weiteres bevorzugtes Ausführungsbeispiel der vorliegenden Erfindung kann es vorsehen, dass es sich bei dem mindestens einen Aufnahmemittel zur Aufnahme von Signalen oder primären Informationen um einen Sensor, insbesondere einen Temperatursensor, einen Helligkeitssensor, einen Feuchtigkeitssensor, einen Bewegungssensor, einen Beschleunigungssensor, einen Magnetfeldsensor, einen Gravitationssensor, ein Amper- bzw. Voltmeter, einen Sensor zum Auslesen von RFIDs, einen Empfänger für radiomagnetische Signale, einen Empfänger für radioaktive Strahlung, einen Bluetooth- oder WLAN-Empfänger, ein Mikrofon oder mindestens ein Schalter, ein Knopf oder ein sonstiges Bedienfeld, um einen Sensor bzw. eine Kamera zur Aufnahme eines Strich- bzw. eines QR-Codes oder um ein Kartenlesegerät handelt. Diese Aufnahmemittel können einzeln oder in Kombination mit mehreren Aufnahmemitteln in das Gehäuse des Handschalters integriert sein. Es ist auch denkbar, dass sich die einzelnen Aufnahmemittel modulartig mit dem Handschalter verbinden lassen.

Des Weiteren kann es die vorliegende Erfindung vorsehen, dass das mindestens eine Ausgabemittel zur Erzeugung einer Maßnahme oder sekundären Information als Strom- bzw. Spannungsquelle, als eine Einrichtung zur Erzeugung eines akustischen, optischen oder haptischen Signals, insbesondere Warnsignals, oder als Einrichtung zur Erzeugung eines elektromagnetischen Signals ausgebildet ist. Somit lässt sich durch das ausgebildete Mittel bei einem entsprechend erfassten Signal bzw. einer primären Information durch eines der Aufnahmemittel eine entsprechende Maßnahme bzw. eine entsprechende sekundäre Information erzeugen. Bei der Initiierung oder Erzeugung mehrerer Maßnahmen, können bestimmte Maßnahmen priorisiert werden. So ist die Initiierung eines Warnsignals beispielsweise in seiner Priorität höher eingestuft als das Einschalten einer Lampe oder eines Kühlaggregates.

Ein besonders bevorzugtes Ausführungsbeispiel der Erfindung kann es außerdem vorsehen, dass der Handschalter eine Einrichtung zur Identifizierung bzw. Authentifizierung der Bedienperson aufweist. So ist es beispielsweise denkbar, dass insbesondere bei Mietfahrzeugen ein Mieter sich zunächst identifizieren bzw. authentifizieren muss, bevor dieser die Hubladebühne bedienen kann. Gleichermaßen ist es auch denkbar, dass für das Be- und Entladen von Gefahrgut die Hubladebühne nur von Personen bedient werden darf, welche eine entsprechende Authentifizierung aufweisen können. Dazu kann ein entsprechender RFID-Chip, eine Karte, aber auch ein Scan eines Fingerabdruckes oder einer Retina dienen. Auf diese Weise lässt sich ein besonders hoher Sicherheitsstandard für die Bedienung der Hubladebühne bzw. des Fahrzeuges erreichen.

Ein Verfahren zur Lösung der eingangs genannten Aufgabe weist die Maßnahme des Anspruchs 7 auf. Demnach ist es vorgesehen, dass durch mindestens ein Aufnahmemittel Signale oder primäre Informationen aufgenommen werden und von mindestens einem Ausgabemittel als Reaktion auf die aufgenommenen Signale oder primären Informationen Maßnahmen oder sekundäre Informationen initiiert oder erstellt werden. Durch dieses automatisierte Erfassen von Signalen oder Informationen durch das mindestens eine Aufnahmemittel und die daraus resultierende Ausgabe einer Maßnahme oder einer weiteren Information erweist sich das Bedienen der Hubladebühne als besonders einfach. Dadurch, dass der Bedienperson durch dieses wenigstens teilautomatisierte Verfahren die Steuerung weiterer Funktionen abgenommen wird, trägt das erfindungsgemäße Verfahren auch zu einer Erhöhung der Sicherheit bei.

Außerdem kann es erfindungsgemäß vorgesehen sein, dass Signale und Informationen zwischen dem Fahrzeug und dem Handschalter kabellos übertragen werden. Durch diese kabellose Übertragung ist die Bedienperson des Handschalters nicht mehr durch das Kabel an das Fahrzeug gebunden, sondern kann sich vielmehr frei in eine Position begeben, von der aus sie die Hubladebühne besonders einfach und sicher bedienen kann.

Ein besonders bevorzugtes Ausführungsbeispiel der vorliegenden Erfindung kann es außerdem vorsehen, dass durch eine dem Handschalter zugeordnete Steuereinrichtung anhand von in einem Speicher des Handschalters gespeicherten Bedingungen bestimmt wird, welche Maßnahmen oder sekundäre Informationen durch das Aufgabemittel als Reaktion auf die aufgenommenen primären Informationen oder Signale erzeugt werden. Durch diese automatisierte Initiierung oder Ausgabe von Maßnahmen bzw. Informationen kann das Anwendungsfeld des Handschalters nahezu beliebig erweitert werden. Auf diese Weise lassen sich nahezu sämtliche Funktionalitäten über den Handschalter kontrollieren. Durch die automatische Ermittlung der durchzuführenden Maßnahme bzw. der auszugebenden Informationen durch den Handschalter unterstützt dieser die Bedienperson auf eine intelligente Weise bei der Bedienung der Hubladebühne.

Ein besonders vorteilhaftes Ausführungsbeispiel der Erfindung kann es vorsehen, dass bei der Aufnahme eines entsprechenden Signals oder einer primären Information ein, insbesondere akustisches, optisches oder haptisches, Warnsignal erzeugt wird, die Hubladebühne und/oder das Fahrzeug angesteuert wird, einzelne Einrichtungen wie Beleuchtung und Kühlung des Fahrzeuges angesteuert werden, eine Anweisung an eine Bedienperson akustisch oder visuell ausgegeben wird, Informationen gespeichert werden oder ein Hinweis auf eine Fehlfunktion oder eine Störung generiert wird. Sämtliche Funktionalitäten im Zusammenhang mit dem Betrieb der Hubladebühne sind somit über die Handsteuerung kontrollier- bzw. steuerbar. Durch die Kompaktheit der Handsteuerung lässt sich diese trotz der vielseitigen Funktionalitäten auf eine einfache Art und Weise handhaben.

Darüber hinaus kann es die Erfindung vorsehen, dass Signale und Informationen zwischen dem Fahrzeug und dem Handschalter durch Pulsweitenmodulation, vorzugsweise verschlüsselt, über Leitungen zur Energieversorgung des Handschalters und/oder Steuerung der Ladebühne übertragen werden. Durch die Verwendung der Pulsweitenmodulation lassen sich somit die bereits vorhandenen Leitungen zur Energieversorgung bzw. Steuerung verwenden, ohne dass zusätzliche Leitungen zwischen dem Fahrzeug und dem Handschalter integriert werden müssten. Darüber hinaus lässt sich durch die Pulsweitenmodulation die Kommunikation zwischen dem Fahrzeug und den Handschalter derartig codieren, dass eine Manipulation weder des Handschalters noch der Steuerung der Hubladebühne möglich wird. Auch bei der kabellosen Steuerung der Hubladebühne sind die zwischen der Hubladebühne und dem Handschalter ausgetauschten Informationen verschlüsselbar.

Bevorzugt kann es außerdem vorgesehen sein, dass sich der Handschalter nur solange in einem aktiven Zustand befindet, wie er durch eine Bedienperson genutzt wird und/oder der Handschalter automatisch abgeschaltet oder in einen Standby-Modus geschaltet wird, wenn er über eine vorzugebende Zeit nicht bewegt wird. Für die erneute Wiederinbetriebnahme des Handschalters muss dieser zunächst wieder aktiviert werden. Auf diese Art und Weise lässt sich eine ungewollte Ansteuerung der Hubladebühne vermeiden.

Ein weiteres Ausführungsbeispiel der vorliegenden Erfindung kann es vorsehen, dass über den Handschalter, vorzugsweise auf RFID-Chips gespeicherte, Informationen über zu transportierende Gegenstände erfasst, gespeichert und/oder weiter verarbeitet werden. Somit lassen sich beispielsweise durch den Handschalter RFID-Chips, welche an zu verladenen Paletten befestigt sind, auslesen. Dadurch erhält der Handschalter Informationen darüber, was und in welchen Mengen von dem Fahrzeug transportiert wird. Bei der Entladung des Fahrzeuges können diese anfangs aufgenommenen Werte mit den Werten der abgeladenen Ware abgeglichen werden. Bei einem Abweichen zwischen diesen Werten kann ein entsprechendes Warnsignal ausgegeben werden. Somit lässt sich der Transport von Waren sowohl dokumentieren als auch kontrollieren. Die so gespeicherten Daten können beispielsweise kabellos oder über ein Kabel an eine weitere Steuereinrichtung übertragen werden. Außerdem ist es denkbar, dass die Daten der Bedienperson über ein optisches Anzeigefeld angezeigt werden.

Ein bevorzugtes Ausführungsbeispiel der Erfindung wird im Folgenden anhand der Zeichnungen näher beschrieben. In dieser zeigen:
- Fig. 1: eine perspektivische Darstellung eines ersten Ausführungsbeispiels eines Handschalters,
- Fig. 2: eine perspektivische Ansicht eines zweiten Ausführungsbeispiels des Handschalters, und
- Fig. 3: eine perspektivische Ansicht eines dritten Ausführungsbeispiels für den Handschalter.

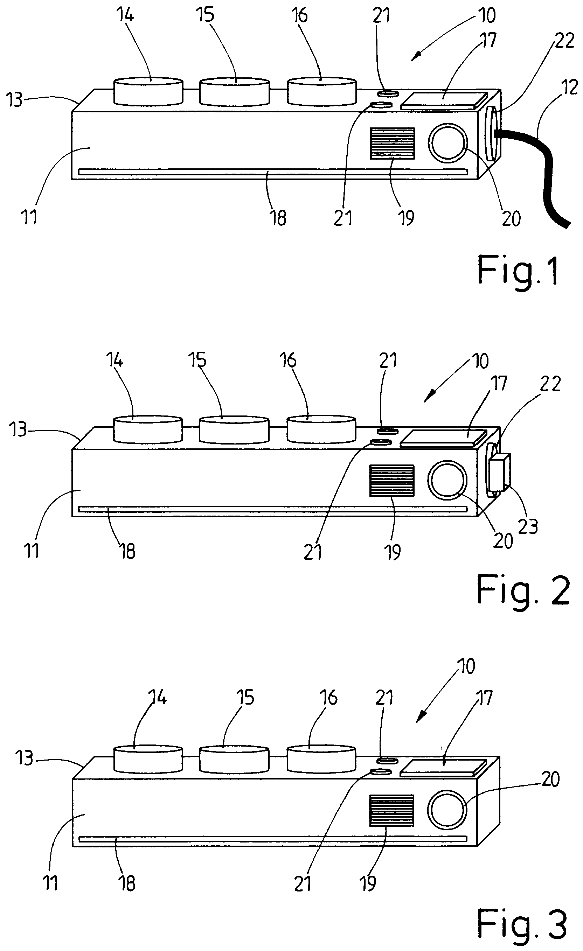

Handschalter der hier beschriebenen Art dienen dazu, Hubladebühnen von Fahrzeugen zu steuern. In den Fig. 1 bis 3 sind stark schematisierte Ausführungsbeispiele für einen Handschalter 10 dargestellt. Es sei ausdrücklich darauf hingewiesen, dass der beanspruchte Handschalter 10 nicht auf die hier dargestellten Ausführungsbeispiele eingeschränkt sein soll. Es ist durchaus denkbar, dass der erfindungsgemäße Handschalter 10 anders als in den Fig. 1 bis 3 ausgebildet ist.

Das in der Fig. 1 dargestellte Ausführungsbeispiel für den Handschalter 10 besteht im Wesentlichen aus einem Gehäuse 11, das über ein Kabel 12 mit einem nicht dargestellten Fahrzeug verbunden ist. Das Kabel 12 kann eine elektrische Leitung zur Energieversorgung des Handschalters 10 sowie mehrere, insbesondere vier elektrische Leitungen für die Steuerung der nicht dargestellten Hubladebühne aufweisen. Das hier quaderförmig ausgebildete Gehäuse 11 kann auch rund, würfelartig oder dergleichen ausgebildet sein.

Zum Bedienen der Hubladebühne weist der Handschalter 10 eine Vielzahl von Bedienelementen auf. In den Fig. sind dem Handschalter 10 beispielsweise einige dieser Bedienelemente zugeordnet. Es ist jedoch auch denkbar, dass der Handschalter 10 weitere bzw. weniger Bedienelemente aufweist. So sind dem in Fig. 1 dargestelltem Handschalter 10 auf einer Oberseite 13 drei als Knöpfe 14, 15, 16 ausgebildete Bedienelemente zugeordnet. Diese Knöpfe 14 bis 16 können der Steuerung der Hubladebühne dienen. Die Steuerung sowie das Design dieser Knöpfe 14 bis 16 sind an die Funktionsweise bekannter Handschalter angeglichen, damit eine Bedienperson den erfindungsgemäßen Handschalter 10 ohne Probleme zur Bedienung der Hubladebühne bedienen kann. Der hier beschriebene Handschalter 10 ist ohne weiteres kompatibel mit bekannten Steuersystemen bzw. Hubladebühnen. So können die Knöpfe 14 bis 16 beispielsweise dazu dienen, die Hubladebühne zu schwenken, abzusenken und anzuheben. Es ist jedoch auch denkbar, dass den Knöpfen 14 bis 16 eine andere Funktion zugeordnet wird.

Der Oberseite 13 des Gehäuses 11 ist außerdem eine Anzeige 17 zugeordnet. Diese Anzeige 17 dient dazu der Bedienperson beispielsweise Informationen über den Betrieb und den Zustand der Hubladebühne anzuzeigen. Auf dieser Anzeige 17 können auch Fehlfunktionen oder Störungen angezeigt werden. Des Weiteren ist es denkbar, dass diese Anzeige 17 als Touchscreen ausgebildet ist und der Bedienperson als zusätzliches Aufnahmemittel für Informationen zur Verfügung steht. Ein weiteres Ausführungsbeispiel sieht es vor, dass die Anzeige 17 als 7-Segment-Display ausgebildet ist, um Bewegungsabläufe wie beispielsweise Auf- und Abbewegungen oder Schwenkbewegungen der Hubladebühne anzuzeigen.

Als Aufnahmemittel für Signale und Informationen, insbesondere primäre Informationen, ist dem Gehäuse 11 stark schematisiert eine Antenne 18 zugeordnet. Über diese Antenne 18 lassen sich beispielsweise elektromagnetische Signale, Bluetooth- oder WLAN-Signale oder Sonstiges erfassen. Über eine in dem Gehäuse 11 angeordnete Steuereinheit oder einen Prozessor lassen sich diese Signale bzw. Informationen erkennen und mit vorgegebenen Werten vergleichen. In Abhängigkeit der empfangenen Signale und Informationen kann beispielsweise erneut über die Antenne als Ausgabemittel entsprechende Maßnahmen initiiert oder Informationen generiert werden. Außerdem ist es denkbar, dass nach einem durch die Antenne 18 empfangenen Signal ein entsprechendes Signal für eine Maßnahme über das Kabel 12 an die Hubladebühne bzw. an deren Antriebe weiter geleitet wird.

Das in Fig. 1 dargestellte Ausführungsbeispiel eines Handschalters 10 weist außerdem ein Mikrofon 19 zur Aufnahme akustischer Signale sowie akustischer Befehle auf. So ist beispielsweise die Hubladebühne über eine Spracheingabe steuerbar. Direkt neben dem Mikrofon 19 ist dem in Fig. 1 dargestellten Ausführungsbeispiel des Handschalters 10 ein Lautsprecher 20 beigeordnet. Über diesen Lausprecher 20 lassen sich akustische Signale ausgeben. Diese Signale können als Hinweis oder Warnsignale verstanden werden. So kann beispielsweise ein schriller Ton ertönen, wenn sich beim Verschwenken bzw. Absenken der Hubladebühne eine Person im Umfeld der Bühne befindet.

Neben dem Lautsprecher 20 zur Erzeugung eines akustischen Signals sind der Oberseite 13 des Gehäuses 11 außerdem beispielhaft zwei Leuchtmittel 21 zugeordnet. Über diese Leuchtmittel 21 sind optische bzw. visuelle Signale erzeugbar. Diese Signale können dazu dienen, den Betrieb der Hubladebühne anzuzeigen bzw. ebenfalls als Warnsignal dienen. Außerdem ist es denkbar, dass die Leuchtmittel 21 bei schlechten Sichtverhältnissen als Taschenlampe dienen. Dazu kann es erfindungsgemäß vorgesehen sein, dass dem Handschalter 10 Helligkeitssensoren zugeordnet sind, die bei entsprechend schlechten Sichtverhältnissen ein Signal ausgeben, gemäß dem die Leuchtmittel 21 angeschaltet werden. Außerdem ist es denkbar, dass die Leuchtmittel 21 in Abhängigkeit von der Uhrzeit an- und ausgeschaltet werden.

Als weiteres Signalmittel kann dem Gehäuse 11 ein Vibrationsaktuator zugeordnet sein. Dieser Aktuator erzeugt bei entsprechender Eingabe ein Vibrieren des Gehäuses 11. So kann das Gehäuse 11 beispielsweise bei einer Überladung der Hubladebühne stark vibrieren.

Außerdem ist es denkbar, dass dem Gehäuse 11 ein Beschleunigungssensor zugeordnet ist, der registriert dass der Handschalter 10 für eine längere Zeit nicht bedient wurde und somit anscheinend nicht mehr benötigt wird. Wird dies durch die Steuereinheit festgestellt, so schaltet sich der Handschalter 10 automatisch ab bzw. geht in einen Standby-Modus.

Außerdem kann dem Handschalter 10 ein 6-Achsen-Gravitationssensor zugeordnet sein, der es ermöglicht, durch bloßes Drehen und Verschwenken des Handschalters 10 die Hubladebühne auf- und abzubewegen und zu verschwenken.

Bei dem in der Fig. 2 dargestellten Ausführungsbeispiel ist das Kabel 12 von dem Gehäuse 11 abkoppelbar. Um weiterhin mit dem Fahrzeug kommunizieren zu können, ist auf eine Kabelbuchse 22 ein Adapter 23 steckbar. Dieser Adapter 23 dient als Sender und Empfänger sämtlicher Signale. Das in der Fig. 2 dargestellte Ausführungsbeispiel weist in seinem Gehäuse 11 eine Batterie oder einen Akku als Energieversorgung auf.

Das in der Fig. 3 dargestellte Ausführungsbeispiel des Handschalters 10 ist als reine Fernbedienung ohne physische Verbindung zu dem Fahrzeug ausgebildet. Auch hier ist es vorgesehen, dass in dem Gehäuse 11 eine autarke Energieversorgung wie beispielsweise eine Batterie oder ein Akku angeordnet ist. Dieses Ausführungsbeispiel kann an einer Unterseite Kontakte für das Aufsetzen des Gehäuses 11 auf eine Ladestation zum Laden der Akkus aufweisen. Ansonsten stimmen die in den Fig. 2 und 3 dargestellten Elemente des Handschalters 10 mit denen aus Fig. 1 überein.

## Patentansprüche

1. Handschalter (10) für eine Hubladebühne eines Fahrzeuges mit einem Gehäuse (11) und mehreren in das Gehäuse (11) integrierten Bedienelementen zur Steuerung der Hubladebühne, **gekennzeichnet durch** mindestens ein Aufnahmemittel zur Aufnahme von Signalen oder primären Informationen und mindestens ein Ausgabemittel zur Erzeugung einer Maßnahme oder sekundären Informationen in Abhängigkeit von den aufgenommenen Signalen oder primären Informationen.

2. Handschalter (10) für eine Hubladebühne nach Anspruch 1, **dadurch gekennzeichnet, dass** der Handschalter (10) mit dem Fahrzeug über ein, insbesondere abkoppelbares, Kabel (12) mit dem Fahrzeug verbunden ist, vorzugsweise dass der Handschalter (10) nach dem Abkoppeln des Kabels (12) mit einem Adapter (23) verbindbar ist zur kabellosen Kommunikation mit dem Fahrzeug, oder dass der Handschalter (10) kabellos ausgebildet ist.

3. Handschalter (10) für eine Hubladebühne nach Anspruch 1 oder 2, **dadurch gekennzeichnet, dass** dem Handschalter (10) eine Steuereinrichtung, insbesondere ein Prozessor, zugeordnet ist, der anhand von in einem Speicher des Handschalters (10) gespeicherten Bedingungen bestimmt, welche Maßnahmen oder sekundären Informationen durch das Ausgabemittel als Reaktion auf die aufgenommenen Signale oder primären Informationen zu initiieren sind.

4. Handschalter (10) für eine Hubladebühne nach einem der vorhergehenden Ansprüche, **dadurch gekennzeichnet, dass** es sich bei dem mindestens einen Aufnahmemittel zur Aufnahme von Signalen oder primären Informationen um einen Sensor, insbesondere einen Temperatursensor, einen Helligkeitssensor, einen Feuchtigkeitssensor, einen Bewegungssensor, einen Beschleunigungssensor, einen Magnetfeldsensor, einen Gravitationssensor, ein Ampere- bzw. Voltmeter, einen Sensor zum Auslesen von RFIDs, einen Empfänger für radiomagnetische Signale, einen Empfänger für radioaktive Strahlung, einen Bluetooth- oder WLAN-Empfänger, ein Mikrofon (19) oder mindestens einen Schalter, einen Knopf (14, 15, 16) oder ein sonstiges Bedienfeld, um einen Sensor bzw. eine Kamera zur Aufnahme eines Strich- bzw. eines QR-Codes oder um ein Kartenlesegerät handelt.

5. Handschalter (10) für eine Hubladebühne nach einem der vorhergehenden Ansprüche, **dadurch gekennzeichnet, dass** das mindestens eine Ausgabemittel zur Erzeugung einer Maßnahme oder sekundären Informationen als Strom- bzw. Spannungsquelle, als eine Einrichtung zur Erzeugung eines akustischen, optischen oder haptischen Signals, insbesondere Warnsignals, oder als Einrichtung zur Erzeugung eines elektromagnetischen Signals ausgebildet ist.

6. Handschalter (10) für eine Hubladebühne nach einem der vorhergehenden Ansprüche, **dadurch gekennzeichnet, dass** der Handschalter (10) eine Einrichtung zur Identifizierung bzw. zur Authentifizierung einer Bedienperson aufweist.

7. Verfahren zum Bedienen einer Hubladebühne eines Fahrzeuges, wobei die Hubladebühne durch einen Handschalter (10) gesteuert wird, **dadurch gekennzeichnet, dass** durch mindestens ein Aufnahmemittel Signale oder primäre Informationen aufgenommen werden und von mindestens einem Ausgabemittel als Reaktion auf die aufgenommenen Signale oder primären Informationen Maßnahmen oder sekundäre Informationen initiiert oder erstellt werden.

8. Verfahren zum Bedienen einer Hubladebühne nach Anspruch 7, **dadurch gekennzeichnet, dass** Signale und Informationen zwischen dem Fahrzeug und dem Handschalter (10) kabellos übertragen werden.

9. Verfahren zum Bedienen einer Hubladebühne nach Anspruch 7 oder 8, **dadurch gekennzeichnet, dass** durch eine dem Handschalter (10) zugeordnete Steuereinrichtung anhand von in einem Speicher des Handschalters (10) gespeicherten Bedingungen bestimmt wird, welche Maßnahmen oder sekundären Informationen durch das Ausgabemittel als Reaktion auf die aufgenommenen primären Informationen oder Signale erzeugt werden.

10. Verfahren zum Bedienen einer Hubladebühne nach einem der Ansprüche 7 bis 9, **dadurch gekennzeichnet, dass** die Maßnahmen und sekundären Informationen aktiv durch eine Bedienperson oder passiv durch das Ausgabemittel, insbesondere durch eine Steuereinrichtung, als Reaktion auf die aufgenommenen Signale oder primären Informationen initiiert werden.

11. Verfahren zum Bedienen einer Hubladebühne nach einem der Ansprüche 7 bis 10, **dadurch gekennzeichnet, dass** bei der Aufnahme eines entsprechenden Signals oder einer primären Information ein, insbesondere akustisches, optisches oder haptisches, Warnsignal erzeugt wird, die Hubladebühne und/oder das Fahrzeug angesteuert wird, einzelne Einrichtungen wie Beleuchtung und Kühlung des Fahrzeuges angesteuert werden, eine Anweisung an eine Bedienperson akustisch oder visuell ausgegeben wird, Informationen gespeichert werden oder ein Hinweis auf eine Fehlfunktion oder eine Störung generiert wird.

12. Verfahren zum Bedienen einer Hubladebühne nach einem der Ansprüche 7 bis 11, **dadurch gekennzeichnet, dass** Signale und Informationen zwischen dem Fahrzeug und dem Handschalter (10) durch Pulsweitenmodulation, vorzugsweise verschlüsselt, über Leitungen zur Energieversorgung des Handschalters und/oder Steuerung der Hubladebühne übertragen werden.

13. Verfahren zum Bedienen einer Hubladebühne nach einem der Ansprüche 7 bis 12, **dadurch gekennzeichnet, dass** sich der Handschalter (10) nur solange in einem aktiven Zustand befindet, wie er durch eine Bedienperson benutzt wird und/oder der Handschalter (10) automatisch abgeschaltet oder in einen Stand-By-Modus geschaltet wird, wenn er über eine vorzugebende Zeit nicht bewegt wird.

14. Verfahren zum Bedienen einer Hubladebühne nach einem der Ansprüche 7 bis 13, **dadurch gekennzeichnet, dass** über den Handschalter (10), vorzugsweise auf RFID-Chips gespeicherte, Informationen über zu transportierende Gegenstände erfasst, gespeichert und/oder weiterverarbeitet werden.
